# EUROPEAN PATENT APPLICATION

(11) **EP 2 728 974 A1**
(43) Date of publication of application: **07.05.2014**
(21) Application number: 13190964.0
(22) Date of filing: 30.10.2013
(51) Int. Cl.: H05B 37/02

(54) **Presence sensor-controlled lighting apparatus**

(30) Priority: 30.10.2012 IT MI20121852
(71) Applicant: ARTEMIDE S.p.A., 20122 Milano (IT)
(72) Inventor: Zanola, Fabio Donato, 22067 Missaglia (IT); Corradi, Danilo, 29010 Nibbiano (IT)
(74) Representative: Cernuzzi, Daniele

(57) **Abstract**

A lighting apparatus (1), in particular a table lamp, includes a light source (2); a power and control device (4) connected to the light source (2); and a power line (11) for powering the light source (2) and the power and control device (4) by means of a power unit (8); the power and control device (4) being designed : to turn the light source (2) off after a first predetermined time interval (T1) in which the presence sensor (7) detects no user presence; and to cut itself and any other electronic devices of the apparatus (1) off from the power supply, by cutting off the power line (11), after a second predetermined time interval (T2), longer than the first time interval (T1), in which the presence sensor (7) detects no user presence.

## Description

The present invention relates to a presence sensor-controlled lighting apparatus, in particular a table lamp.

Energy saving on lighting, especially in the workplace, is an increasingly important issue.

To prevent lighting apparatus in the workplace from being left on, even when not needed, presence sensors are known to be used, which automatically turn the apparatus on and off, depending on the presence or absence of a user.

Known presence sensor-controlled apparatus leave room for improvement, especially as regards energy consumption and easy manufacture and use.

It is an object of the present invention to provide a presence sensor-controlled lighting apparatus which, compared with known solutions, is easier to produce and use, is reliable, and provides for considerable energy saving.

According to the present invention, there is provided a lighting apparatus, in particular a table lamp, comprising a light source; a supporting body supporting the light source; a control device connected to the light source and having a presence sensor; and a power line for powering the light source and the control device; the control device being designed to :
- turn the light source off after a first predetermined time interval in which the presence sensor detects no user presence; and
- cut itself and any other electronic devices of the apparatus off from the power supply, by cutting off the power line, after a second predetermined time interval, longer than the first time interval, in which the presence sensor detects no user presence.

More specifically, the control device is designed to turn the light source back on, if the presence sensor detects the presence of a user during the second time interval, during which, the control device remains active and is powered by being connected to the power line.

When the second predetermined time interval expires without the presence sensor detecting the presence of a user, the control device cuts off the power line to turn itself off and disconnect the apparatus from the mains.

The apparatus according to the invention advantageously comprises a power unit, which has an input connected to the power line and one or more outputs for powering the control device, the presence sensor, and the light source.

The control device preferably comprises a control circuit on an electronic board; and the power unit is integrated in the electronic board.

Basically, the lighting apparatus according to the invention is controlled by a control device equipped with a presence sensor; and operation of the apparatus is controlled by the control device on the basis of signals from the presence sensor, not only to turn the apparatus light source on/off when the presence or absence of a user is detected (for a given time), but also in such a manner that, after a further predetermined time interval, in which no user presence is detected, the control device cuts itself and the apparatus as a whole off from the power supply to also eliminate any parasitic losses resulting from connection to the electric mains.

The apparatus according to the invention also differs from commonly marketed solutions by having no adapter/power unit, as is typically the case with apparatus equipped with LED and/or low-power sources, or even certain fluorescent applications : the power units of the apparatus and the control device, in fact, are integrated in one electronic board.

According to the invention, the apparatus is not connected permanently to the mains : the apparatus light source goes off after a given time interval (e.g. 5 minutes), but the control device remains powered (connected to the power mains) and ready to turn the light source back on, should the presence of a user be detected (low-consumption but still an energy draw condition); and, after a further time interval (e.g. 30 minutes), in which no user presence is detected, the apparatus is turned off altogether by disconnecting it from the power mains.

This fully eliminates any no-load absorption, which can have a significant effect on consumption as a whole.

A non-limiting embodiment of the present invention will be described by way of example with reference to the attached drawings, in which :
Figure 1 shows a schematic view of a lighting apparatus, in particular a workplace lighting apparatus, in accordance with the invention;
Figure 2 shows a diagram of a number of component parts of the Figure 1 apparatus.

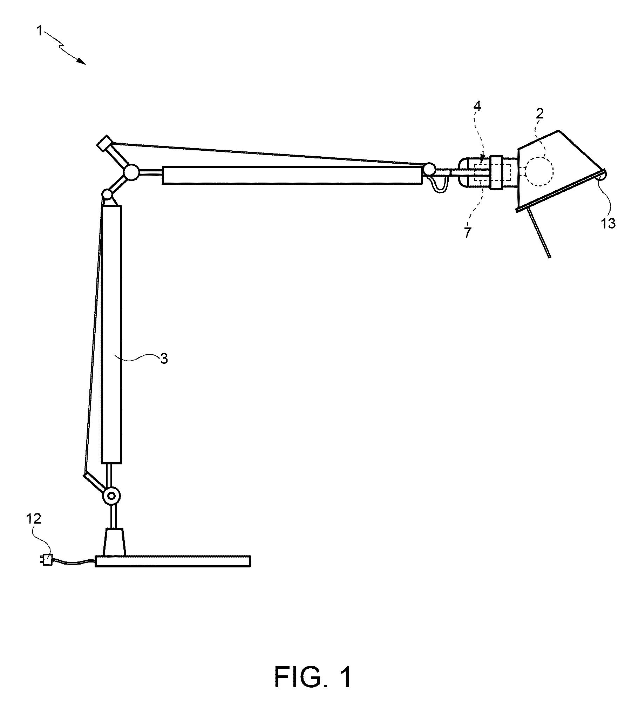

Figure 1 shows a schematic of a lighting apparatus 1, in particular a table lamp.

Apparatus 1 comprises a light source 2 (possibly defined by a number of lighting bodies); a supporting body 3 for supporting light source 2; and a power and control device 4.

Supporting body 3 is designed according to how apparatus 1 is mounted and used, e.g. as a table lamp (as in the non-limiting example shown), floor lamp, ceiling lamp, etc.

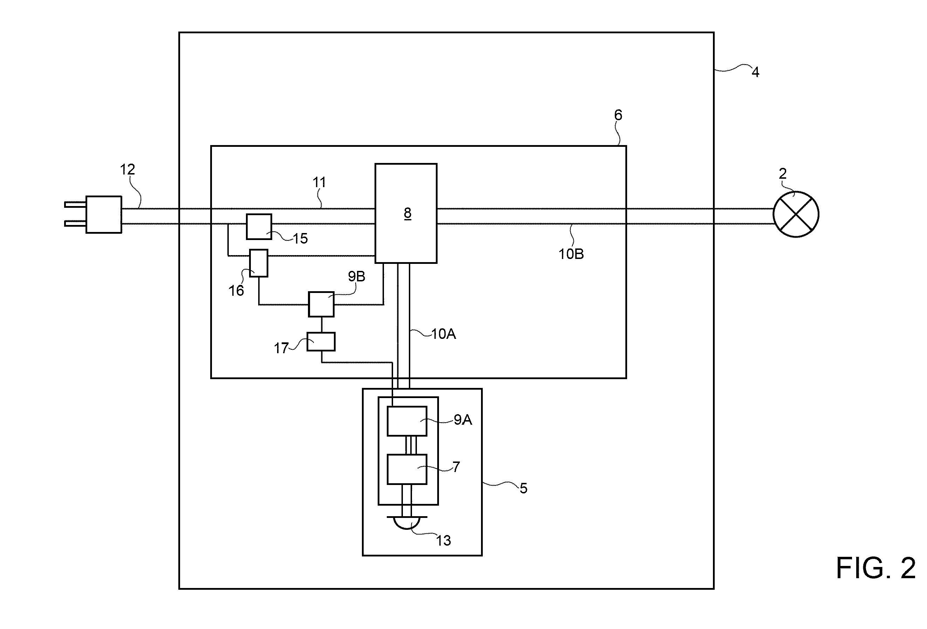

With reference also to Figure 2, power and control device 4 comprises a control circuit 5; an electronic power board 6 connected to control circuit 5 and light source 2; and a presence sensor 7 which is connected to control circuit 5, and, depending on the type of apparatus 1, may also be located remotely with respect to control circuit 5 and/or electronic board 6, and may be either wired or wireless connected to control circuit 5 and electronic board 6, in which latter case it is associated with a wireless communication module (e.g. a radiofrequency or other type of module).

More specifically, control circuit 5 comprises a processor 9A, and is connected by a power line 10A to an external power unit 8 integrated in electronic board 6.

Electronic board 6 has an input connected to a power line 11, in turn connectable by a power cable 12 to an external power mains. Power unit 8 powers the various component parts of apparatus 1, i.e. light source 2 and power and control device 4. More specifically, power unit 8 powers control circuit 5 and, depending on the solution adopted, presence sensor 7 or a communication module wireless-connected to it (if located remotely, presence sensor 7, in fact, be powered independently, e.g. by a battery).

If necessary, power unit 8 is configured to vary the power parameters of light source 2 and/or to convert the mains voltage to a suitable voltage by which to power light source 2.

Presence sensor 7 has a sensor 13 for detecting the presence of a user within a predetermined range of apparatus 1. Sensor 13 may be of any known type, e.g. a motion, temperature, volume sensor, etc. In a preferred embodiment, though not necessarily, sensor 13 is an active, e.g. ultrasound, type.

Presence sensor 7 is installed, for example, on supporting body 3, or is separate or detachable from supporting body 3 for remote installation. Whichever the case, presence sensor 7 is wired or wireless-connected to control circuit 5, and therefore to electronic board 6, to supply signals by cable or in wireless mode to processor 9A.

Presence sensor 7 (unless located remotely and powered independently, e.g. by a battery) and control circuit 5 are powered by power line 10A from power unit 8, which powers apparatus 1 as a whole (and therefore, in particular, light source 2 by a power line 10B).

Upstream from power unit 8, power line 11 to power unit 8 is fitted with a pushbutton switch 15 (an unstable switch that only cuts off power line 11 when pressed, and re-connects it when released).

In the non-limiting embodiment in Figure 2, electronic power board 6 is equipped with a processor 9B (or equivalent circuit) which is activated by the closing of switch 15, and is configured to control a second unstable switch 16 to keep power line 11 connected to power unit 8 when switch 15 is released.

Processor 9B is optionally associated with an optoisolator interposed between processor 9B and control circuit 5, or, more generally speaking, between power line 11 and control circuit 5.

It is understood that power and control device 4 may either be equipped with both processors 9A, 9B, or with only one of them, preferably processor 9A on control circuit 5, or processor 9B on electronic power board 6.

In more detail, apparatus 1 operates as follows.

Apparatus 1 is turned on by pushbutton switch 15, which enables switch 16 to keep apparatus 1 in the ON state by permanently connecting power line 11, that powers power and control device 4 and light source 2.

Apparatus 1 remains ON as long as sensor 13 of presence sensor 7 detects the presence of a user.

After a first predetermined time interval T1 (e.g. 5 minutes) in which no user presence is detected by presence sensor 7, control circuit 5 turns light source 2 off, whereas power and control device 4 remains active by being connected to power line 11.

In this condition, light source 2 is off, but control circuit 5 and, in particular, presence sensor 7 are powered and therefore active. So, if presence sensor 7 detects the presence of a user, control circuit 5 turns light source 2 back on.

After a second predetermined time interval T2 (e.g. 30 minutes) in which no user presence is detected by presence sensor 7, control circuit 5 cuts power and control device 4 off from the power supply by physically cutting off power line 11 (or by equivalent system).

During the second time interval T2, light source 2 remains off, but control circuit 5 and, in particular, presence sensor 7 are powered and therefore active and ready to turn light source 2 back on. At the end of the second time interval T2, power and control device 4 also goes off and, from this point on, apparatus 1 is turned on again by switch 15.

Clearly, changes may be made to the lighting apparatus as described and illustrated herein without, however, departing from the scope of the accompanying Claims.

## Claims

1. A lighting apparatus (1), in particular a table lamp, comprising a light source (2); a supporting body (3) supporting the light source (2); a power and control device (4) connected to the light source (2) and having a presence sensor (7); and a power line (11) for powering the light source (2) and the power and control device (4) by means of a power unit (8); the apparatus (1) being **characterized in that** the power supply and control device (4) is configured so as to:
- turn the light source (2) off after a first predetermined time interval (T1) in which the presence sensor (7) detects no user presence; and
- cut itself and any other electronic devices of the apparatus (1) off from the power supply, by cutting off the power line (11), after a second predetermined time interval (T2), longer than the first time interval (T1), in which the presence sensor (7) detects no user presence.

2. A apparatus as claimed in Claim 1, wherein the power and control device (4) comprises a control circuit (5) wired or wireless-connected to the presence sensor (7); and an electronic power board (6) connected to the control circuit (5) and the light source (2).

3. A apparatus as claimed in Claim 2, wherein the power and control device (4) is configured to keep the control circuit (5) active and powered, by keeping the control circuit (5) connected to the power line (11), during said second time interval (T2); and so that the control circuit (5) turns the light source (2) back on if the presence sensor (7) detects the presence of a user during said second time interval (T2).

4. A apparatus as claimed in Claim 2 or 3, wherein the power and control device (4) is configured so that, when said second time interval (T2) expires without the presence sensor (7) detecting the presence of a user, the control circuit (5) cuts the power and control device (4) off from the power supply.

5. A apparatus as claimed in one of Claims 2 to 4, wherein the presence sensor (7) is located remotely with respect to the control circuit (5), and is wired or wireless-connected to the control circuit (5), being, in the latter case, associated with a wireless communication module.

6. A apparatus as claimed in one of Claims 2 to 5, wherein the control circuit (5) comprises a processor (9A) wired or wireless-connected to the presence sensor (7) so that the presence sensor (7) transmits signals to the processor (9A).

7. A apparatus as claimed in one of Claims 2 to 6, wherein the control circuit (5) is connected by a power line (10A) to the power unit (8), which is integrated in the electronic power board (6) and powers the various component parts of the apparatus (1), namely the light source (2), the control circuit (5), and the presence sensor (7) or a communication module wireless-connected to it in the event the presence sensor (7) is located remotely.

8. A apparatus as claimed in one of the foregoing Claims, wherein, upstream from the power unit (8), the power line (11) to the power unit (8) is equipped with a pushbutton switch (15); and the power and control device (4) comprises a processor (9B) or equivalent circuit, which is activated when the pushbutton switch (15) is pressed, and is configured to control a second switch (16) to keep the power line (11) connected to the power unit (8) when the pushbutton switch (15) is released.
